# EUROPEAN PATENT SPECIFICATION

(11) **EP 0 654 105 B1**
(45) Date of publication and mention of the grant of the patent: **12.03.1997**
(21) Application number: 93918040.2
(22) Date of filing: 17.08.1993
(51) Int. Cl.: E02F 3/24, F16H 1/22, B23D 47/12

(54) **TRENCH CUTTING ASSEMBLIES**
GRABENFRÄSE
DISPOSITIFS SERVANT A CREUSER DES TRANCHEES

(30) Priority: 17.08.1992 GB 9217452
(43) Date of publication of application: 24.05.1995
(73) Proprietor: AUTOMAC EQUIPMENT LIMITED, Braiswick, Colchester, Essex C04 5BQ (GB)
(72) Inventor: FULFORD, Dennis, Rodney White House 67 Braiswick, Essex CO4 5BQ (GB)
(74) Representative: Gillam, Francis Cyril
(86) International application number: GB9301743
(87) International publication number: WO9404763

(56) References cited:
- EP-A- 0 162 729
- DE-A- 2 758 255
- GB-A- 157 145
- GB-A- 649 235
- PATENT ABSTRACTS OF JAPAN vol. 11, no. 258 (M-618)(2705) 21 August 1987 & JP,A,62 063 060 (HIROSHI TANAKA)

## Description

This invention relates to a trench cutting assembly.

Machines which use a rotating wheel fitted with cutters to cut trenches are well known. One kind of such trenching machine employs a wheel which is mounted on and driven by an axial shaft. This allows the wheel to be relatively thin and so to cut a narrow trench, required say for installing cables or pipes under roads or for some types of land drainage. A drawback of this type of wheel is that the drive shaft and its associated drive mechanism have to be above the trench top, which restricts the depth to which the wheel can cut to under half the wheel diameter, and frequently to only one third of that diameter.

There is another known type of trenching machine which has a wheel provided with an eccentric drive, where a drive pinion engages external drive teeth near the upper periphery of the wheel. The wheel is rotatably supported on a frame that is narrower than the trench to be excavated so that both the wheel and the frame can be lowered into the trench as it is cut. With this type of wheel trenches can be excavated to a depth of well over half the diameter of the wheel and typically to two thirds thereof, often allowing a wheel of half the diameter to do the same work as a centrally-driven wheel.

The advantage of using a smaller diameter wheel is most important, as for any given depth of trench a much smaller machine may be used. It is also possible to dig deeper trenches than otherwise when the wheel is used as an attachment on plant such as a skid steer loader or a backhoe excavator.

Eccentrically driven wheels as described above are necessarily more complex than those centrally driven and the frame with the bearings needed to support the wheel and the drive teeth needed to drive it are usually relatively wide, so needing a wider trench to accommodate them. The disadvantage of the extra trench width is not only that more power is needed to drive the wheel but that handling the extra excavated material, as well as providing, carting, infilling and compacting a different backfilling material and reinstating the greater surface area all substantially increase the costs of the overall trenching operation.

A principal aim of this invention is to provide a robust arrangement for rotatably supporting and driving a cutting wheel which can be made relatively narrow, whilst maintaining the advantage of depth capacity given by an eccentric drive.

According to the present invention there is provided a trench cutting assembly comprising a rotatable element adapted to carry a plurality of external cutters and having a plurality of rollers mounted internally of any carried cutters which rollers are spaced around a common pitch circle, a support provided with an arcuate support surface on which said rollers of the rotatable element engage so as radially to support the rotatable element for rotation about the axis of said pitch circle, said trench cutting assembly further comprising at least one drive pinion rotatably mounted on said support so that said drive pinion drivingly meshes with said rollers to effect rotation of the rotatable element, and drive means to rotate the drive pinion.

Most preferably, the support surface is of a discontinuous circular form, defined for example by a disc with a cut-out portion in the periphery thereof, said drive pinion being mounted within the discontinuity so that the pinion axis lies within the pitch circle of the rollers and internally meshes therewith. In this way, the assembly may be made most compact and the rotatable element may be particularly narrow, allowing slit-like trenches to be cut.

Two or more separate drive pinions may be provided within the discontinuity, each pinion having its own drive means, for instance in the form of an hydraulic motor coupled to the respective pinion. This arrangement reduces the forces on each pinion and on the rollers engaged thereby, and also allows the use of lower-powered motors for a required total power input to the rotatable element.

Two specific embodiments of the invention will now be described by way of example with reference to the accompanying drawings in which:-
Figure 1 shows a trenching machine of this invention mounted on the arm of a backhoe excavator, with the arm pulled in;
Figure 2 shows the arrangement of Figure 1 but with the arm extended;
Figure 3 is a diagrammatic end view of the wheel and the support frame;
Figure 4 is a vertical section through the centre of the wheel, face on;
Figure 5 is a vertical section through the centre of the wheel, edge on; and
Figure 6 is a view similar to that of Figure 4, but of a second embodiment of trenching machine.

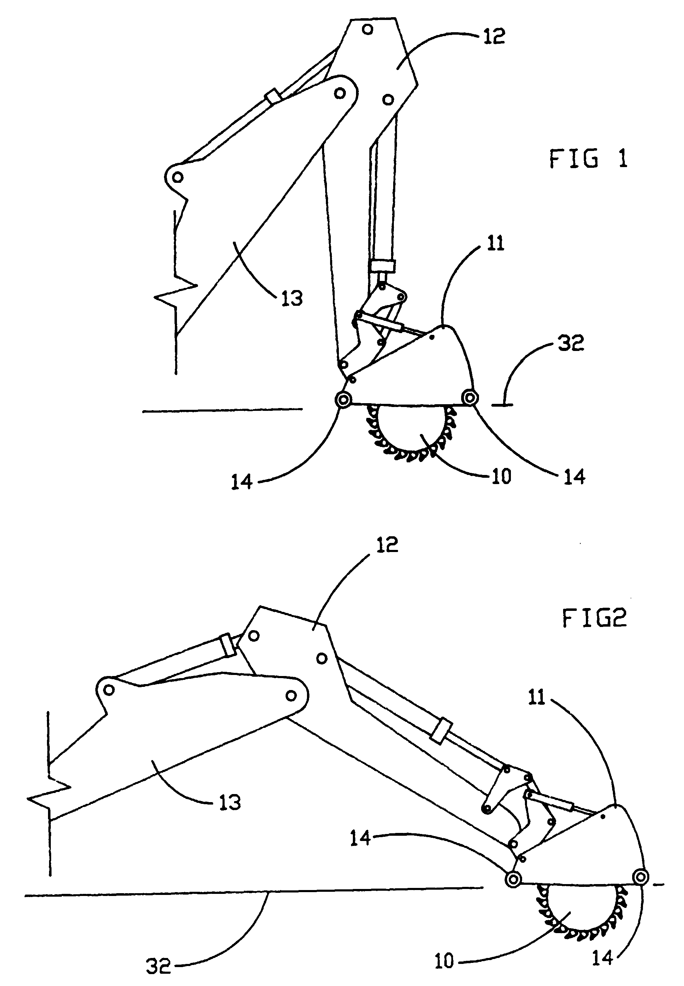

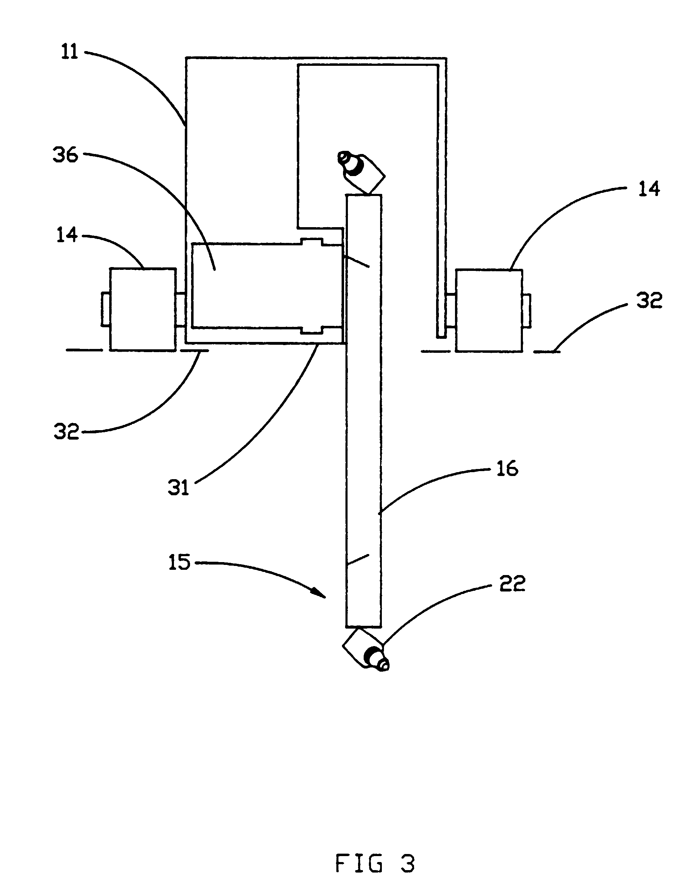

Referring to Figures 1 and 2, the trench cutting wheel 10 with its support frame 11 is shown attached to an hydraulically operated arm 12 of a backhoe excavator. The trench cutting wheel 10 is rotatably driven using the hydraulic supply of the backhoe excavator. The arms 12 and 13 are used to lower the trench cutting wheel 10 and its support frame 11 to cut a trench to the depth set by depth wheels 14 and then to provide forward motion by pulling the cutting wheel towards the backhoe excavator.

Referring now to Figures 3, 4 and 5, the cutting wheel comprises a rotatable element 15 including a side disc 16 having a series of equi-spaced holes on a common pitch circle, adjacent its outer periphery. Located in each hole is the end portion of a respective pin 17 mounted on an annular plate 18 of the same outer diameter as disc 16, a respective roller 19 being rotatably mounted on each pin 17 between the disc 16 and the plate 18.

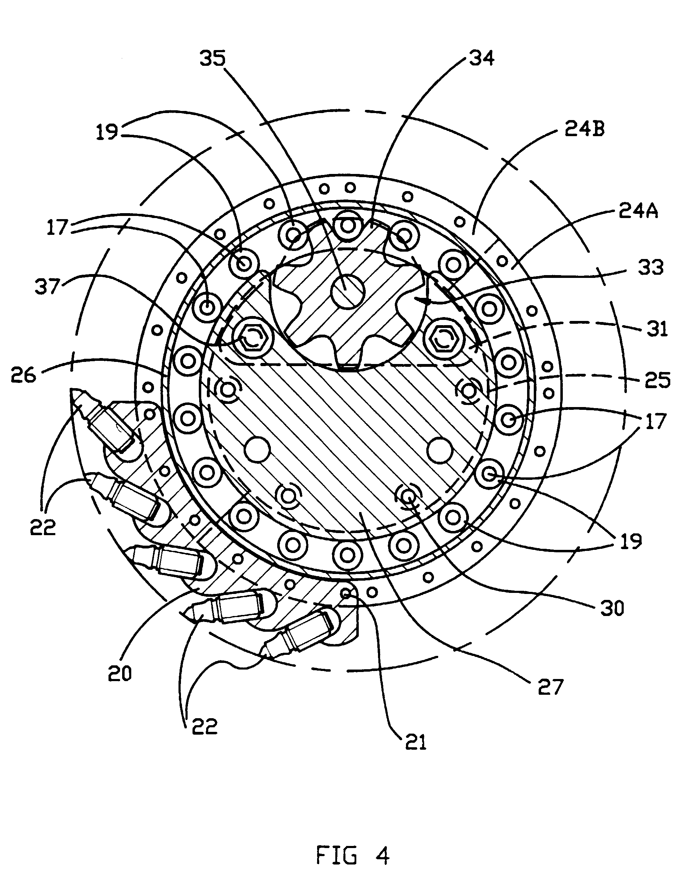

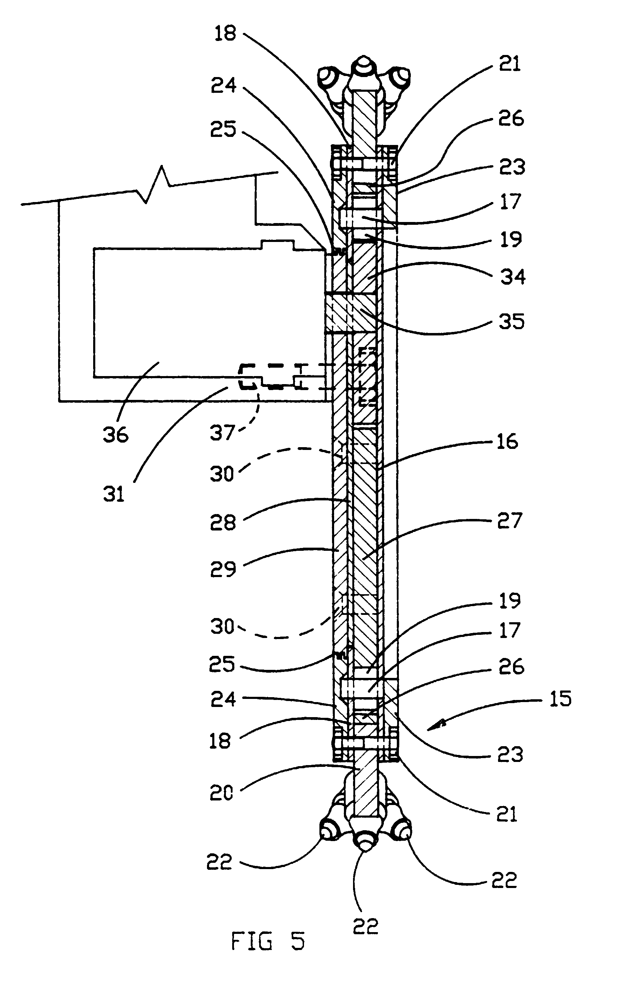

Four cutter carriers 20 (only one of which is shown in Figure 4) are arranged end-to-end around the rotatable element, the carriers being located between the peripheral margins of the disc 16 and plate 18, and being clamped in position by bolts 21, which bolts also serve to hold together the assembly of disc 16 and plate 18. Each carrier 20 supports five cutters 22 each having a replaceable cutting tip, the cutters being arranged to cut different tracks across the trench width, as shown diagrammatically in Figure 5, for three cutters. The bolts 21 also serve to clamp a replaceable annular wear-plate 23 to the disc 16 and another replaceable wear-plate 24 to the annular plate 18. Wear plate 24 is in two semi-circular sections 24A and 24B, and is formed with a part of a labyrinth seal 25 around its inner periphery. A circular seal strip 26 is fixed to disc 16, to extend between the disc 16 and plate 18, to surround the rollers 19 and prevent the ingress of foreign matter thereto.

A stationary support plate 27 has a smooth outer periphery of part-circular form, the rollers 19 running on that periphery so as rotatably to mount the element 15 on the plate 27. The support plate 27 is demountably and concentrically attached to an inner disc 28 and a seal plate 29 by countersunk bolts 30. The inner edge of the annular plate 18 is a close running fit around the inner disc 28, and the outer periphery of the seal plate 29 co-operates with the inner periphery of wear-plate 24 to complete therewith the labyrinth seal 25. Other seal designs may instead be employed.

Bolts 30 serve to attach the inner disc 28 and seal plate 29 to the support plate 27. Bolts 37 attach the assembly of the support plate 27, inner disc 28 and seal plate 29 to the support frame 11 by an arm 31 so positioned that the arm is always above the level of the ground at the trench top 32 when the trench cutting wheel is in use, and lowered until the depth control wheels 14 engage the ground.

The support plate 27 has a cut-out portion 33 in which is positioned a pinion 34 mounted on, radially supported by and driven by a shaft 35 of an hydraulic motor 36 which is mounted on the arm 31 in such a manner that the pinion 34 is in the same plane as the rollers 19 and the support plate 27, and meshes with the rollers 19 to effect rotation of the rotatable element 15. The rollers 19 thus perform the double duty of providing the radial bearing for the element 15, and also of transmitting the driving force to the element. The rotatable element 15 is held against axial movement in one direction by the side disc 16 engaging one side of the support plate 27, and in the other direction by the inner peripheral region of the annular plate 18 engaging the other side of the support plate.

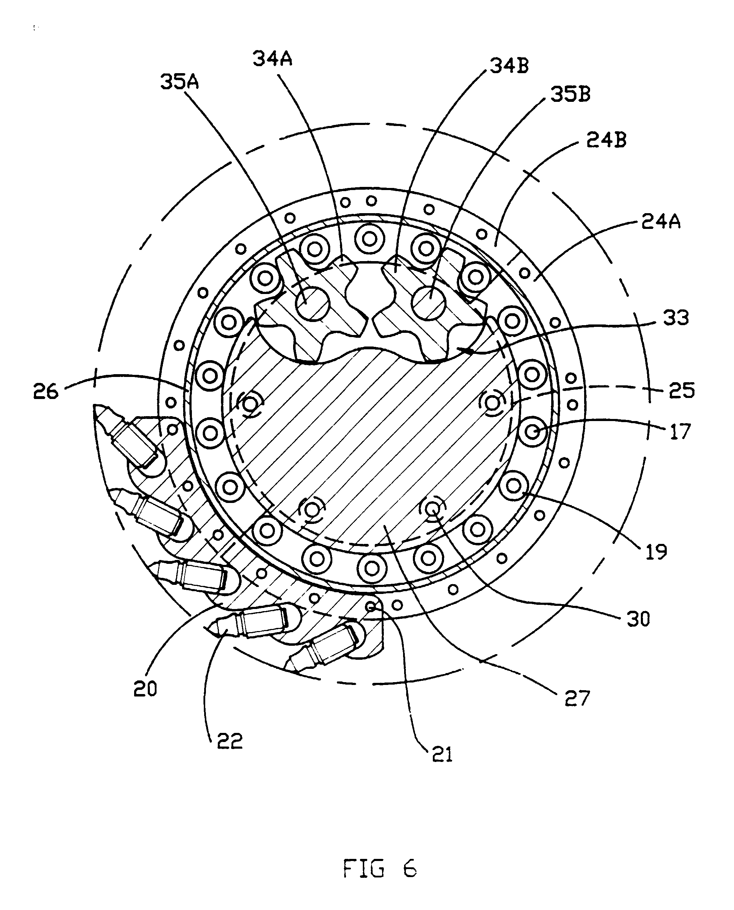

Figure 6 shows a second embodiment of cutting wheel assembly, in which two drive pinions 34A and 34B are provided, mounted on respective shafts 35A and 35B. Each shaft is driven by an independent hydraulic motor (not shown). The cut-out 33 in plate 27 must correspondingly be enlarged to accommodate the two pinions, but in other respects the assembly is similar to that described with reference to Figures 3 to 5. Like reference characters have been used to indicate like parts and these will not be described again, here.

The assembly of Figure 6 allows the load, for a given trenching operation, on each pinion and imparted to the rollers to be halved. Also, hydraulic motors of a lower capacity may be employed.

In an alternative drive arrangement, an hydraulic motor is mounted remote from the pinion shaft 35 (or 35A and 35B), and is coupled thereto for example by a reduction chain-drive. In this case, a flywheel may be mounted on the motor shaft, to assist the cutting action of the wheel.

The rotatable cutting wheel assemblies described above are provided with robust drive arrangements, and are also robustly supported both radially and axially, all within the confines of the axial width of the wheels.

## Claims

1. A trench cutting assembly comprising a rotatable element (15) adapted to carry a plurality of external cutters (22) and having a plurality of rollers (19) mounted internally of any carried cutters which rollers are spaced around a common pitch circle, a support (27) provided with an arcuate support surface on which said rollers (19) of the rotatable element (15) engage so as radially to support the rotatable element for rotation about the axis of said pitch circle, said trench cutting assembly further comprising at least one drive pinion (34) rotatably mounted on said support (27) so that said drive pinion (34) drivingly meshes with said rollers (19) to effect rotation of the rotatable element (15), and drive means (35,36) to rotate the drive pinion.

2. A trench cutting assembly as claimed in Claim 1, wherein the support surface is of a discontinuous circular form, said drive pinion (34) being mounted within the discontinuity (33) in the support surface so that the pinion axis lies within the pitch circle of the rollers (19) and the pinion internally meshes therewith.

3. A trench cutting assembly as claimed in Claim 1 or Claim 2, wherein more than one drive pinion (34) is provided, each such pinion being meshed with said rollers (19) to impart drive thereto.

4. A trench cutting assembly as claimed in Claim 2, wherein at least two drive pinions (34A,34B) are provided, arranged side by side within the discontinuity (33) in the support surface so that the axes of both drive pinions lie within the pitch circle of the rollers (19) and each internally meshes with the rollers.

5. A trench cutting assembly as claimed in any of the preceding Claims, wherein the drive means includes an hydraulic motor (36), for the or each drive pinion (34).

6. A trench cutting assembly as claimed in any of the preceding Claims, wherein the support includes a support member (27) defining said arcuate support surface and co-operating axial thrust faces (16,28) are provided on the rotatable element and the support member, to hold the rotatable element against axial movement with respect to the support.

7. A trench cutting assembly as claimed in any of the preceding Claims, wherein the rollers (19) and the support surface (27) are located wholly within the axial width of the rotatable element (15).

8. A trench cutting assembly as claimed in Claim 5, wherein the rotatable element is in the form of a wheel (15) arranged to carry cutters (22) on the external periphery thereof, the rollers (19) and the support surface being disposed internally of the wheel periphery.

9. A trench cutting assembly as claimed in any of the preceding Claims, wherein the support (27) includes means (11,31) to mount the support on the arm (12,13) of an excavator or the like, which mounting means is disposed in the vicinity of the drive pinion (34), wholly to one side of a diameter of said pitch circle.

10. A trench cutting assembly as claimed in any of the preceding Claims, wherein seal means (25) are provided to isolate the rollers (19) and support surface (27) from the external environment.

11. A trench cutting assembly as claimed in any of the preceding Claims, wherein a replaceable wear-ring (24) is mounted on one side of the rotatable element (15), around the periphery thereof.

## Patentansprüche

1. Grabenfräse mit einem drehbaren Element (15), das dazu ausgestaltet ist, eine Anzahl außenliegender Fräsmesser (22) zu halten, und mit einer Anzahl von Rollen (19), die bezüglich der gehaltenen Fräsmesser innenliegend montiert sind, wobei die Rollen um einen gemeinsamen Wälzkreis herum beabstandet angeordnet sind, und mit einer Halterung (27), die mit einer gekrümmten Haltefläche versehen ist, auf der die Rollen (19) des drehbaren Elements (15) aufliegen, um so das drehbare Element zur Drehung um die Achse des Wälzkreises radial zu halten, wobei die Grabenfräse außerdem zumindest ein Antriebsritzel (34), das drehbar an der Halterung (27) montiert ist, so daß das Antriebsritzel (34) antreibend mit den Rollen (19) kämmt, um eine Drehung des drehbaren Elements (15) zu bewirken, und eine Antriebseinrichtung (35, 36) aufweist, um das Antriebsritzel zu drehen.

2. Grabenfräse nach Anspruch 1, wobei die Haltefläche eine von einer Aussparung unterbrochene kreisförmige Form hat und wobei das Antriebsritzel (34) in der Aussparung (33) der Haltefläche montiert ist, so daß die Achse des Ritzels innerhalb des Wälzkreises der Rollen (19) liegt und das Ritzel innen mit diesen kämmt.

3. Grabenfräse nach Anspruch 1 oder Anspruch 2, wobei mehr als ein Antriebsritzel (34) vorgesehen ist, wobei jedes Antriebsritzel mit den Rollen (19) kämmt, um auf diese Kraft aufzubringen.

4. Grabenfräse nach Anspruch 2, wobei mindestens zwei Antriebsritzel (34A, 34B) vorgesehen sind, die Seite-an-Seite in der Aussparung (33) der Haltefläche angeordnet sind, so daß die Achsen von beiden Antriebsritzeln innerhalb des Wälzkreises der Rollen (19) liegen und jedes innen mit den Rollen kämmt.

5. Grabenfräse nach einem der vorhergehenden Ansprüche, wobei die Antriebseinrichtung für das oder für jedes Antriebsritzel (34) einen hydraulischen Motor (36) hat.

6. Grabenfräse nach einem der vorhergehenden Ansprüche, wobei die Halterung ein die gekrümmte Haltefläche bildendes Haltebauteil (27) hat und wobei zusammenwirkende axiale Druckseiten (16, 28) an dem drehbaren Element und dem Haltebauteil vorgesehen sind, um das drehbare Element bezüglich der Halterung gegen eine axiale Bewegung zu halten.

7. Grabenfräse nach einem der vorhergehenden Ansprüche, wobei sich die Rollen (19) und die Haltefläche (27) vollständig innerhalb der axialen Breite des drehbaren Elements (15) befinden.

8. Grabenfräse nach Anspruch 5, wobei das drehbare Element die Form eines Rades (15) hat, das dazu ausgestaltet ist, die Fräsmesser (22) an seinem äußeren Umfang zu halten, wobei die Rollen (19) und die Haltefläche innerhalb des Radumfangs angeordnet sind.

9. Grabenfräse nach einem der vorhergehenden Ansprüche, wobei die Halterung (27) eine Einrichtung (11, 31) enthält, um die Halterung an dem Arm (12, 13) eines Baggers oder ähnlichem zu befestigen, wobei die Befestigungseinrichtung in der Nähe des Antriebsritzels (34) vorgesehen ist, und zwar vollständig an einer Seite eines Durchmessers des Wälzkreises.

10. Grabenfräse nach einem der vorhergehenden Ansprüche, wobei Dichtungseinrichtungen (25) vorgesehen sind, um die Rollen (19) und die Haltefläche (27) von der äußeren Umgebung zu isolieren.

11. Grabenfräse nach einem der vorhergehenden Ansprüche, wobei ein austauschbarer Verschleißring (24) an einer Seite des drehbaren Elements (15) um dessen Umfang angebracht ist.

## Revendications

1. Ensemble de taille de tranchée, comprenant un élément rotatif (15) adapté à porter une série d'outils de taille externes (22), et possédant une série de galets (19) montée intérieurement aux outils de taille lorsque ceux-ci sont portés par l'élément rotatif, lesquels galets sont espacés autour d'un cercle primitif commun, un support (27) pourvu d'une surface de support arquée sur laquelle lesdits galets (19) de l'élément rotatif (15) s'appuient de façon à supporter radialement l'élément rotatif en rotation autour de l'axe du cercle primitif, ledit ensemble de taille comprenant en outre au moins un pignon d'entraînement (34) monté rotativement sur ledit support (27) de sorte que ledit pignon d'entraînement (34) engrène, dans une relation d'entraînement, avec lesdits galets (19) pour produire une rotation de l'élément rotatif (15), et des moyens d'entraînement (35, 36) pour faire tourner le pignon d'entraînement.

2. Ensemble de taille de tranchée selon la revendication 1, dans lequel la surface de support est de forme circulaire discontinue, ledit pignon d'entraînement (34) étant monté dans la discontinuité (33) prévue dans la surface de support de façon que l'axe du pignon s'étende à l'intérieur du cercle primitif des galets (19) et le pignon engrène intérieurement avec ceux-ci.

3. Ensemble de taille de tranchée selon la revendication 1 ou 2, dans lequel il est prévu plus d'un pignon d'entraînement (34), chaque tel pignon engrenant avec lesdits galets (19) pour leur communiquer un entraînement.

4. Ensemble de taille de tranchée selon la revendication 2, dans lequel il est prévu au moins deux pignons d'entraînement (34A, 34B) disposés côte à côte dans la discontinuité (33) prévue dans la surface de support de façon que les axes des deux pignons d'entraînement s'étendent à l'intérieur du cercle primitif des galets (19) et que chacun engrène intérieurement avec les galets.

5. Ensemble de taille de tranchée selon l'une quelconque des revendications précédentes, dans lequel les moyens d'entraînement comprennent un moteur hydraulique (36) pour le ou chaque pignon d'entraînement (34).

6. Ensemble de taille de tranchée selon l'une quelconque des revendications précédentes, dans lequel le support comprend un organe de support (27) définissant ladite surface de support arquée, et des faces d'appui axial coopérantes (16, 28) sont prévues sur l'élément rotatif et l'organe de support, pour retenir l'élément rotatif à l'encontre d'un mouvement axial par rapport au support.

7. Ensemble de taille de tranchée selon l'une quelconque des revendications précédentes, dans lequel les galets (19) et la surface de support (27) sont entièrement logés dans la largeur axiale de l'élément rotatif (15).

8. Ensemble de taille de tranchée selon la revendication 5, dans lequel l'élément rotatif est sous la forme d'une roue (15) agencée pour porter des outils de taille (22) sur sa périphérie extérieure, les galets (19) et la surface de support étant disposés intérieurement à la périphérie de la roue.

9. Ensemble de taille de tranchée selon l'une quelconque des revendications précédentes, dans lequel le support (27) comprend des moyens (11, 31) pour monter le support sur le bras (12, 13) d'une excavatrice ou analogue, lesquels moyens de montage sont disposés au voisinage du pignon d'entraînement (34), entièrement d'un côté d'un diamètre dudit cercle primitif.

10. Ensemble de taille de tranchée selon l'une quelconque des revendications précédentes, dans lequel des moyens d'étanchéité (25) sont prévus pour isoler les galets (19) et la surface de support (27) de l'environnement extérieur.

11. Ensemble de taille de tranchée selon l'une quelconque des revendications précédente, dans lequel une bague d'usure remplaçable (24) est montée sur un côté de l'élément rotatif (15), autour de la périphérie de celui-ci.
